## Europäisches Patentamt
## European Patent Office
## Office européen des brevets

(19)

(11) Publication number: **0 057 602**
**A2**

(12)

# EUROPEAN PATENT APPLICATION

(21) Application number: **82300493.2**

(22) Date of filing: **29.01.82**

(51) Int. Cl.³: **G 06 K 19/06, G 07 F 7/10**

(30) Priority: **30.01.81 GB 8102894**

(43) Date of publication of application: **11.08.82**
**Bulletin 82/32**

(84) Designated Contracting States: **AT BE CH DE FR GB IT LI LU NL SE**

(71) Applicant: **Chalmers, David Arthur, 75 Gordon Road, London N3 1ER (GB)**
Applicant: **Ward, William, 14 Belsize Park Gardens, London, NW3 4LO (GB)**
Applicant: **Halpern, John Wolfgang, 14 Belsize Park Gardens, London, NW3 4LO, (GB)**

(72) Inventor: **Chalmers, David Arthur, B.Sc., 75 Gordon Road, London, N3 1ER (GB)**

(74) Representative: **Andrews, Robert Leonard et al, HASELTINE LAKE & Co. Hazlitt House, 28 Southampton Buildings Chancery Lane, London WC2A 1AT (GB)**

(54) **Adaptable value token.**

(57) A portable on-person data component comprising in a unified construction a highly integrated circuit capable of performing data logic and processing fucntions, is connected, on the one hand, to means (1) arranged on the component for manually inserting command data into keyboard scanning and logic recognition circuit (2) representing for example program data or a personal identity number, on the other hand is also connected to input/output circuitry (15) which is accessible from the outside solely via a reactive coupling link (capacitive or inductive coupling). ·

The device includes a long-life battery for maintaining the various memory circuits. Clock pulses received via an inductive pickup loop (20) partially recharge the battery during every use cycle, and provide the basic synchronization with the circuitry in the terminal to which the component is coupled. There is also a display device (13) on which the holder may call up any of a number of data records held in data stores (5 and 6). Other stores in the circuitry cannot be read out nor displayed, such as for example the instruction registre or the personal identity register preset in the component.

It is a feature of the invention that program data can be introduced via the reactive interface (17) in order that the processing steps may reflect the nature of the terminal into which the component is inserted and interfaced by proximity. It is clear that different performance tasks are to be performed when the terminal is: a vending machine, an electronic game input device, a bus farebox, a train access gate, a security access gate, etc. Program Data entered into a data component by a terminal are arranged to cancel any incompatible program data entered manually via the keyboard (1).

COMPLETE DOCUMENT

0057602

Adaptable Value-Token
-------------------------

Various types of cards or tokens to be used in the place of cash have been described in the technical literature. The most advanced types, for example as described in the patent application 8028824 (UK) or corresponding US Ser. No 184377 can have their effective value periodically increased by the issuing Bank. To avoid fraudulent transactions several security features are designed into such pay token and the associated cash flow system. A major drawback from the user's point of view is that such a pay token can be used only in conjunction with one bank account, or with one specific credit card organisation. Often, pay tokens are only for specific uses such as for making a journey with a bus; or for paying for a phone call.

This invention describes a value-token which can be changed to work in several modes and may therefore be applied to manifold uses. Mode control would be either by push touch buttons or similar means provided on the token itself, and/or by encoded instructions signalled to the value-token from an external read/write terminal into which the token is plugged during transactions.

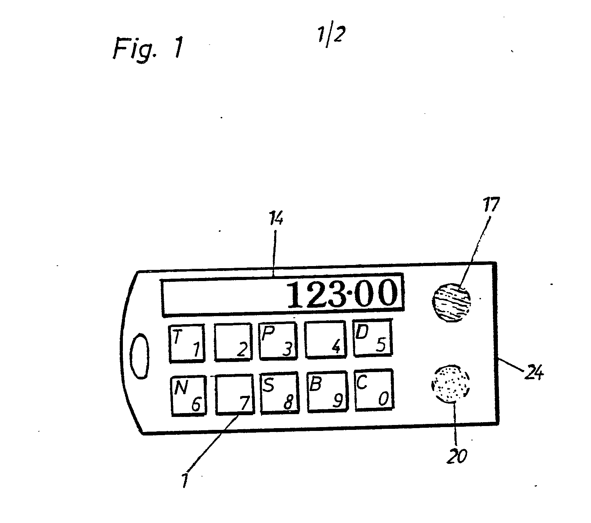

Figure 1 shows an example for the general appearance and features of a typical implementation of the token. (1) is a keyboard which is used to change the mode of operation of the token and also to input data to the token. By way of illustration this are some of the ways the keyboard may be used : pressing B and T selects a program which causes the data corresponding to the cash balance of the owner to be displayed on the liquid crystal display (4). Or, pressing C and N followed by 123 enters the number 123 into one of the internal stores of the token. This means that the owner wishes to withdraw from his bank account £ 123 and load this amount into the token; this transaction is then rapidly executed at the bank's outdoor terminal. (24) is the edge of the token which is inserted into the terminal.

0057602

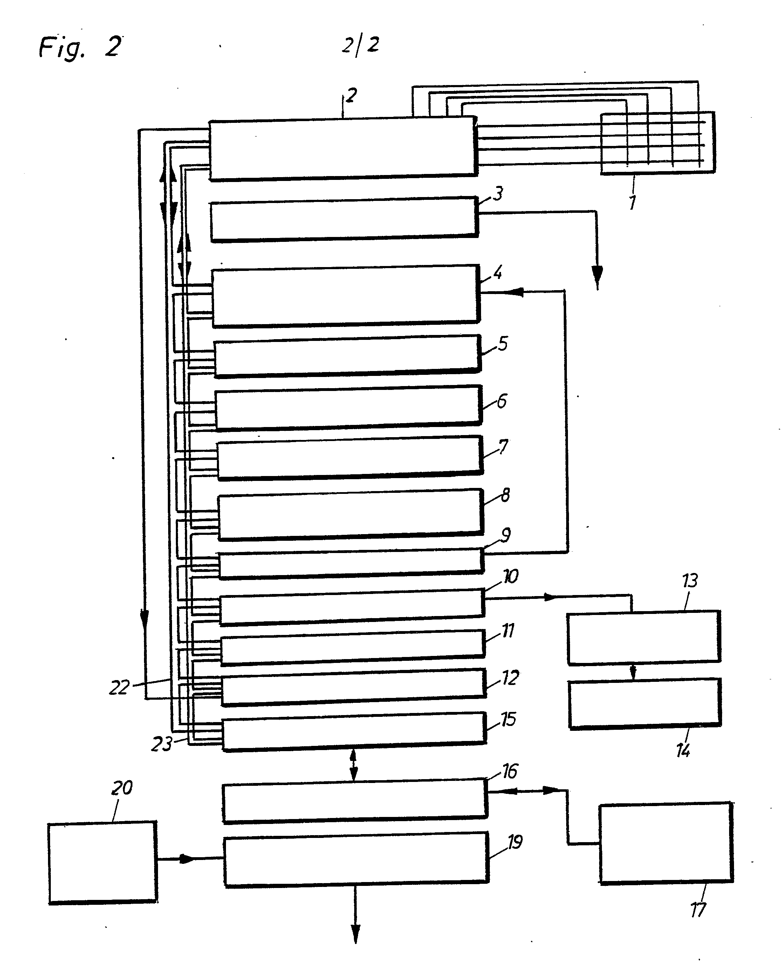

Figure 2 shows in schematic form one way in which a typical token may be implemented.

(1) is a keyboard rather similar in execution as in some hand calculators;Eight signal lines are scanned under control of (2) so that this circuit can electronically recognize which button or combination of buttons has been pressed. (3) is an oscillator which is the basic means for manipulating data through a sequence of instructions.

(4) are control circuits which themselves are controlled by the Instruction Register (9); they are constituted by logic circuitry provided to ensure the correct execution of the instructions. (5) is a set of registers containing fixed data, for example the account number of the token owner. Once the data have been entered into these registers during manufacture they can never be changed.

(6) is a number of registers containing data that can be changed via the data bus (21) from sources internal and external to the token. (7), (8), (9), (10) and (11) are registers in which data may be memorized. (7) is a store consisting of a number of registers in which fixed programmes are permanently stored during manufacture of the integrated circuit. (8) is a store consisting of a number of registers in which externally changable programmes are stored. (9) is a register which receives the keyed-in instruction to set the token for a specific performance. (10) is a register which at any time contains the data scheduled for display or requested for display on the Liquid Crystal panel (14).

(11) is a register which contains information as to the exact state at any time of the internal condition of the token circuitry so that external equipment can be informed via the input/output port (15,16,17) of this state. (12) is a register which temporarily stores in coded form which programme is being carried out. (13) is a set of binary logic circuits which decodes the data in (10) so that it can be used to control the LCD panel (14). The block 15 signifies a set of logic circuits which, working under the control of the control circuits (4) and the oscillator (3) change data from binary paralell form into a sequence of pulses or vice versa. Block (16) represents a circuit which carries out one of two alternative functions. In one form the pulses to be outputted are power amplified and used to drive the inductive transmitter/receiver (17); in the second form pulses picked up by the inductive receiver (17) are amplified and shaped so that they are suitable to operate with the rest of the circuitry. (2) is a second inductive component which is used to pick up from the terminal into which a token is plugged, radiated power which is used to charge the token's encapsulated battery (19). This power input may also be used to inhibit the keyboard (1) and to enable input data via the inductive component (17). (22) is a data Bus along which data are transferred between the various sections of the circuitry of the token. (23) is an address Bus which is used, by means of binary signals, to control the destination of the data on (22).

All the circuits enumerated are well known in the art and therefore it is only the particular combination and manner of use which is the claimed unique factor of the invention.

A program is a set of instructions; when these are carried out in sequence a program is being implemented. In addition to such programmes brought into action via the said token keyboard, instructions may be introduced, one by one, in an ordered sequence via the external token terminal which would be designed to bring into operation one or the other of the internally stored programmes. In this mode of operation, the external circuitry after imputting to the token an instruction, awaits a signal from the token indicating that the instruction has been carried out and then, and only then inputs the next instruction and so on until all the instructions have been implemented.

C L A I M S
------------

1. An adaptable value-token containing a large scale integrated circuit having a multiplicity of fixed and changable data- and program stores, input/output circuits, and means for transferring data bidirectionally from/to the token to/from an external data base, c h a r a c t e r i z e d by the provision of a multi-function keyboard on the surface of the token for selecting one of at least two different operating modes of the token circuit.

2. An adaptable value-token containing a large scale integrated circuit having a multiplicity of fixed and changable data-and program stores as in Claim 1 wherein the token has further means for receiving from an external data base to which it may be coupled encoded instructions, means for decoding these instructions and for making them select one of at least two different operating modes of the token circuit so as to adapt the token to the general requirements of the data system to which it is coupled.

3. An adaptable value-token containing a large scale integrated circuit having a multiplicity of fixed and changable data-and program stores as in Claim 1, w h e r e i n the coupling means consist of coils loaded by ferric cores.

4. An adaptable value-token as in claims 1 to 3 w h e r e i n the data token has a display window for displaying desired data in humanly readable digits.

5. An adaptable value-token exhibiting the features as described in the specification and illustrated in the drawings.

5

6.    An adaptable value-token as in claim 3,
wherein at least one of the data coupling means consists
of a ferrite-loaded coil.

7.    An adaptable value-token as in claim 1,
wherein the keyboard carries alpha-numeric designations,
and where the letter signs are used to gain access to one
of the instruction registers (9) or program stores (12) to
define the function mode or the address location for the
storing or processing of subsequently entered numerical
information.

8.    An adaptable value-token as in claim 1,
wherein the data token contains registers (8) which
receive program data solely via an inductively coupled
terminal.

9.    An adaptable data token as in claim 1,
wherein the token contains at least one diagnostic
register (11) which is loaded by various criteria of the
internal token circuit condition, and which via an
input/output port (15,16,17) on interrogation passes
a status indicating report to the display of an external
display unit.

10.    An adaptable value-token as in claim 1,
wherein a letter of a combination of letters keyed on the
token provides access to a PIN number register into which
an n-digit number is entered and compared with a fixed
store register (5).

Fig. 1

Fig. 2  2/2  0057602